# EUROPÄISCHE PATENTSCHRIFT

(11) **EP 3 475 029 B1**
(45) Veröffentlichungstag und Bekanntmachung des Hinweises auf die Patenterteilung: **05.08.2020**
(21) Anmeldenummer: 18726105.2
(22) Anmeldetag: 16.05.2018
(51) Int. Cl.: B23Q 16/10, B23Q 11/00

(54) **VORRICHTUNG ZUM KLEMMEN EINES DREHBAR GELAGERTEN WELLENELEMENTS, INSBESONDERE ZUM EINSATZ AN EINER WERKZEUGMASCHINE, UND ACHSAUFBAU EINER WERKZEUGMASCHINE**
DEVICE FOR CLAMPING A ROTATABLY MOUNTED SHAFT ELEMENT, IN PARTICULAR FOR USE ON A MACHINE TOOL, AND AXIS STRUCTURE OF A MACHINE TOOL
DISPOSITIF POUR LA FIXATION D'UN ÉLÉMENT D'ARBRE MONTÉ DE MANIÈRE ROTATIVE, EN PARTICULIER POUR L'UTILISATION DANS UNE MACHINE-OUTIL, ET ENSEMBLE D'AXES D'UNE MACHINE-OUTIL

(30) Priorität: 17.05.2017 DE 102017208348; 17.08.2017 DE 102017214362
(43) Veröffentlichungstag der Anmeldung: 01.05.2019
(73) Patentinhaber: DECKEL MAHO Pfronten GmbH, 87459 Pfronten (DE)
(72) Erfinder: GÄNßLE-KLENK. Frank Mathias, 87484 Nesselwang (DE); KIPKE, Stefan, 87471 Durach (DE)
(74) Vertreter: MERH-IP Matias Erny Reichl Hoffmann Patentanwälte PartG mbB
(86) Internationale Anmeldenummer: PCT/EP2018/062740
(87) Internationale Veröffentlichungsnummer: WO 2018/210932

(56) Entgegenhaltungen:
- EP-A1- 2 189 241
- EP-A2- 1 088 616
- DE-A1- 10 319 139

## Beschreibung

Die vorliegende Erfindung betrifft eine Vorrichtung zum Klemmen eines drehbar gelagerten Wellenelements, insbesondere zum Einsatz an einer Werkzeugmaschine. Insbesondere betrifft die vorliegende Erfindung eine Vorrichtung (Klemmvorrichtung bzw. Sicherheitsklemmvorrichtung) zur Klemmung bzw. Sicherheitsklemmung eines drehbar gelagerten Wellenelements, insbesondere eines Wellenelements einer Schwenk- bzw. Rundachse einer Werkzeugmaschine.

Eine solche Vorrichtung ist z.B. aus dem Dokument EP 2 189 241 A bekannt.

Weiterhin betrifft die vorliegende Erfindung einen Achsaufbau einer Werkzeugmaschine mit einer derartigen Vorrichtung zum Klemmen eines drehbar gelagerten Wellenelements.

### Hintergrund der Erfindung

Im Stand der Technik sind Werkzeugmaschinen, insbesondere numerisch gesteuerte Werkzeugmaschinen, mit mehreren steuerbaren Achsen bekannt. Eine Werkzeugmaschinenachse ist eine Baueinheit einer Werkzeugmaschine, die eine Relativbewegung eines Werkzeugs relativ zu einem mit dem Werkzeug zu bearbeitenden Werkstück steuert. Hierbei können Werkzeugmaschinen einerseits ein oder mehrere Linearachsen umfassen, zur Steuerung einer Relativbewegung eines Werkzeugs relativ zu einem mit dem Werkzeug zu bearbeitenden Werkstück in einer jeweiligen linearen Richtung. Zudem können derartige Werkzeugmaschinen sogenannte Schwenk- oder Rundachsen aufweisen zur Steuerung einer relativen Rotations- oder Schwenkbewegung des Werkzeugs relativ zu dem mit dem Werkzeug zu bearbeitenden Werkstück um eine Rotations- bzw. Schwenkachse.

Einerseits sind hier zum Beispiel an Fräsmaschinen, Universal-Werkzeugmaschinen bzw. Bearbeitungszentren Schwenk- bzw. Rundachsen bekannt, mittels denen eine, das Werkzeug tragende Arbeitsspindel relativ zu dem Werkstück um eine Schwenk- oder Rotationsachse verschwenkbar bzw. rotierbar ist. Des Weiteren sind zum Beispiel an Fräsmaschinen, Universal-Werkzeugmaschinen bzw. Bearbeitungszentren Drehtische, Rundtische bzw. rotierende Werkzeugtische bekannt, auf denen ein Werkstück einspannbar ist und mittels denen das auf dem Werkzeugtisch aufgespannte Werkstück um eine Schwenk- bzw. Rotationsachse verschwenkbar bzw. rotierbar ist. Des Weiteren sind an Werkzeugmaschinen Arbeitsspindeln bekannt, die ein Werkstück oder ein Werkzeug tragen und dazu eingerichtet sind, mittels einer Spindelwelle, die von einem Spindelmotor angetrieben wird, das eingespannte Werkzeug bzw. das eingespannte Werkstück um die Spindelachse rotierend anzutreiben. An Drehmaschinen bzw. Drehzentren sind zudem rotierende Spindel- bzw. Werkzeugrevolver bekannt, die eine Mehrzahl von Spindeln bzw. Werkzeugen halten und um eine Revolverachse rotiert werden können.

Allen vorstehend genannten Revolver-, Rund- bzw. Schwenkachsen bzw. Spindeln ist es gemein, dass zumindest ein drehbar gelagertes Wellenelement vorhanden ist, das mittels eines Antriebs bzw. Achsantriebs um die Rotations- bzw. Wellenachse rotatorisch antreibbar ist.

Insbesondere bei größeren und massiveren Schwenk- bzw. Rundachsaufbauten ist es an Werkzeugmaschinen vorgesehen, dass das drehbar gelagerte Wellenelement im nichtangetriebenen, stillstehenden Zustand fixierbar ist, insbesondere auch aus Sicherheitsgründen. Hierbei ist es insbesondere vorgesehen, dass eine derartige Fixierung, Klemmung bzw. Sicherheitsklemmung eines drehbar gelagerten Wellenelements einerseits präzise klemmbar bzw. lösbar ist, bevorzugt ohne zeitliche Verzögerung der Aktivierung bzw. Klemmung. Andererseits ist es vorgesehen, dass die Sicherheitsklemmung in geklemmtem Zustand bei einfachem und bevorzugt kostenreduziertem Aufbau dennoch eine hohe Sicherheit bzw. eine feste Klemmung erlaubt, die insbesondere bis zu sehr hohen Drehmomenten von bevorzugt über 1000 Nm noch eine sichere und drehfeste Klemmung gewährleistet.

Aus den vorstehend genannten Gründen ist es eine Aufgabe der vorliegenden Erfindung, insbesondere zum Einsatz an einer Werkzeugmaschine eine Vorrichtung zum Klemmen einer drehbar gelagerten Welle bzw. eines drehbar gelagerten Wellenelements, insbesondere zum Einsatz an einer Rund- bzw. Schwenkachse einer Werkzeugmaschine, bereitzustellen, die bei einfachem, platzsparendem und kostenreduziertem Aufbau dennoch eine präzise ansteuerbare Klemmung bei gleichzeitig hohen Klemmleistungen ermöglicht.

### Zusammenfassung der Erfindung

Gemäß der vorliegenden Erfindung wird eine Vorrichtung zum Klemmen eines drehbar gelagerten Wellenelements gemäß dem unabhängigen Anspruch 1 vorgeschlagen. Abhängige Ansprüche betreffen bevorzugte bzw. beispielhafte Ausführungsformen der vorliegenden Erfindung.

Gemäß eines Aspekts der vorliegenden Erfindung wird eine Vorrichtung zum Klemmen eines drehbar gelagerten Wellenelements vorgeschlagen, die folgend beschriebenen Merkmale umfassen kann.

Die Vorrichtung umfasst ein Gehäuseelement, das bevorzugt einen ringförmigen Gehäuseabschnitt aufweist oder bevorzugt ringförmig ausgestaltet ist, wobei das drehbar gelagerte Wellenelement sich in axialer Richtung durch einen Innenbereich des ringförmigen Gehäuses bzw. Gehäuseabschnitts erstreckend anordenbar ist.

Die Vorrichtung umfasst ein elastisch verformbares, ringförmiges Klemmringelement, das in dem Gehäuseelement bzw. dem ringförmigen Gehäuseabschnitt des Gehäuseelements angeordnet ist.

Das Klemmringelement weist ein Querschnittsprofil auf, mit einem ersten Profilabschnitt, der sich radial nach innen erstreckt, und welcher insbesondere durch eine umlaufende, insbesondere ringförmig umlaufende, Öffnung des Gehäuses bzw. ringförmigen Gehäuseabschnitts zu dem drehbar gelagerten Wellenelement radial hin ragt, und zumindest einem zweiten Profilabschnitt, der sich quer zu dem ersten Profilabschnitt, insbesondere axial bzw. in axialer Richtung, erstreckt.

Die Vorrichtung umfasst ein eine Druckkammer, die in dem Gehäuseelement bzw. dem ringförmigen Gehäuseabschnitt des Gehäuseelements ausgebildet ist und bevorzugt zumindest einen Druckkammerabschnitt aufweist, der vorzugsweise radial innenseitig benachbart zu dem zumindest einen zweiten Profilabschnitt des Klemmringelements angeordnet ist.

Das drehbar gelagerte Wellenelement ist in einem Ruhezustand des Klemmringelements durch kraftschlüssige Verbindung mit dem zu dem Wellenelement hin ragenden ersten Profilabschnitt des Klemmringelements klemmbar, und die kraftschlüssige Verbindung zwischen dem Wellenelement und dem ersten Profilabschnitt ist zur Lösung der Klemmung des Wellenelements lösbar, bevorzugt indem das Klemmringelement durch pneumatische und/oder hydraulische Druckbeaufschlagung der Druckkammer radial nach außen elastisch verformbar ist bzw. verformt wird.

Es ergibt sich ein Vorteil, dass im Ruhezustand ohne beaufschlagtem Druck in der Druckkammer die Welle bzw. das drehbar gelagerte Wellenelement über das Klemmringelement geklemmt ist. Weiterhin ergibt sich ein Vorteil einer sehr effizienten Sicherheitsfunktion, da bei Ausfall des Pneumatik- oder Hydrauliksystems bzw. bei auftretenden Undichtigkeiten bzw. einem unerwünschten Abfall des Systemdrucks, zum Beispiel bis auf den Umgebungsdruck (z.B. äußerer Luftdruck), eine automatische Sicherheitsklemmung des Wellenelements ohne Verzögerung gewährleistbar ist.

Zusätzlich ergibt sich ein Vorteil, dass durch Druckbeaufschlagung in der Druckkammer ohne Verzögerungen durch elastische Verformung des Klemmringelements in Richtung radial nach außen die Klemmung des drehbar gelagerten Wellenelements schnell, einfach und effizient ohne Verzögerung möglich ist.

Weiterhin kann die Vorrichtung einfach, kostenreduziert und sowohl in radialer als auch axialer Richtung kompakt aufgebaut bereitgestellt werden, und eine einfache und effiziente Wartung kann ermöglicht werden.

In bevorzugten beispielhaften Ausführungsformen ist im Ruhezustand des Klemmringelements ein Innendurchmesser an dem ersten Profilabschnitt kleiner ist, als ein Außendurchmesser eines umlaufenden Kontaktabschnitts des Wellenelements oder eines an dem Wellenelement drehfest befestigten Ringelements, das insbesondere bevorzugt als Vollringelement oder als eine Mehrzahl von Ringsegmentelementen ausgebildet sein kann. Bevorzugt wird der erste Profilabschnitt des Klemmringelements zur kraftschlüssigen Verbindung an dem umlaufenden Kontaktabschnitt des Wellenelements oder am an dem Wellenelement drehfest befestigten Ringelement, oder an dessen Ringelementsegmenten, angepresst bzw. presst an diesen/diese an.

In bevorzugten beispielhaften Ausführungsformen umfasst die Vorrichtung einen an ein Pneumatik- und/oder Hydrauliksystem anschließbaren Anschluss, der bevorzugt zur Druckbeaufschlagung über eine oder mehrere in dem ringförmigen Gehäuseabschnitt des Gehäuseelements ausgebildete Fluidleitungen mit der Druckkammer verbunden ist.

In bevorzugten beispielhaften Ausführungsformen umfasst die Vorrichtung eine Dichtung, die dazu ausgebildet ist, einen Bereich zwischen dem ersten Profilabschnitt und der Druckkammer abzudichten.

In bevorzugten beispielhaften Ausführungsformen umfasst die Dichtung zwei Dichtungsringelemente, die bevorzugt auf jeweils axial gegenüberliegenden Seiten des ersten Profilabschnitts des Klemmringelements angeordnet sind.

In bevorzugten beispielhaften Ausführungsformen bilden der zumindest eine zweite Profilabschnitt und der erste Profilabschnitt des Klemmringelements zusammen im Wesentlichen eine L-Form aus. Dies schließt nicht aus, dass andere, zusätzliche und von der L-Form abweichende Profilabschnitte vorhanden sein können.

In bevorzugten beispielhaften Ausführungsformen erstreckt sich ein von dem ersten Profilabschnitt entfernter Endabschnitt des zumindest einen zweiten Profilabschnitts in radialer Richtung oder zumindest quer zur axialen Richtung.

In bevorzugten beispielhaften Ausführungsformen weist das Querschnittsprofil des Klemmringelements zwei zweite Profilabschnitte auf, die bevorzugt auf jeweils axial gegenüberliegenden Seiten des ersten Profilabschnitts des Klemmringelements angeordnet sind und/oder sich jeweils quer zu dem ersten Profilabschnitt, insbesondere axial, erstrecken.

In bevorzugten beispielhaften Ausführungsformen bilden die zwei zweiten Profilabschnitte und der erste Profilabschnitt des Klemmringelements zusammen im Wesentlichen eine (bevorzugt liegende) T-Form aus. Dies schließt nicht aus, dass andere, zusätzliche und von der T-Form abweichende Profilabschnitte vorhanden sein können.

In bevorzugten beispielhaften Ausführungsformen umfasst die Druckkammer zwei Druckkammerabschnitte, die bevorzugt jeweils auf axial gegenüberliegenden Seiten des ersten Profilabschnitts des Klemmringelements angeordnet sind, und bevorzugt jeweils einem der zwei zweiten Profilabschnitte des Klemmringelements zugeordnet sind.

In bevorzugten beispielhaften Ausführungsformen ist jeder der zwei Druckkammerabschnitte radial innenseitig in Bezug auf den jeweiligen zugeordneten zweiten Profilabschnitt des Klemmringelements angeordnet.

In bevorzugten beispielhaften Ausführungsformen drückt eine Druckbeaufschlagung in der Druckkammer bzw. dem Druckkammerabschnitt den zumindest einen zweiten Profilabschnitt des Klemmringelements radial nach außen, und bevorzugt drückt eine Druckbeaufschlagung in den Druckkammerabschnitten jeweils den zugeordneten zweiten Profilabschnitt des Klemmringelements radial nach außen.

In bevorzugten beispielhaften Ausführungsformen ist der zumindest eine Druckkammerabschnitt der Druckkammer ringförmig umlaufend in dem ringförmigen Gehäuseabschnitt des Gehäuseelements ausgebildet.

Gemäß einem weiteren Aspekt der vorliegenden Erfindung wird ein Achsaufbau einer Werkzeugmaschine vorgeschlagen, umfassend ein Gehäuse, ein in dem Gehäuse drehbar gelagertes Wellenelement einer Schwenk-, Rund- oder Revolverachse oder einer Spindel der Werkzeugmaschine, und eine Vorrichtung zum Klemmen des drehbar gelagerten Wellenelements gemäß einem der vorstehenden Aspekte, wobei das Gehäuseelement der Vorrichtung bevorzugt drehfest an dem Gehäuse des Achsaufbaus befestigt ist.

### Kurzbeschreibung der Figuren

Fig. 1 zeigt eine beispielhafte Perspektivdarstellung einer Rundachsvorrichtung einer Werkzeugmaschine gemäß einem beispielhaften Ausführungsbeispiel der vorliegenden Erfindung;
Fig. 2 zeigt eine beispielhafte Schnittdarstellung durch einen oberen Teil der Rundachsvorrichtung aus Fig. 1;
Fig. 3 zeigt eine Detaildarstellung einer Klemmvorrichtung der Rundachsvorrichtung gemäß einem Ausführungsbeispiel der vorliegenden Erfindung gemäß Fig. 2;
Fig. 4 zeigt eine Schnittdarstellung einer beispielhaft ringförmig ausgestalteten Vorrichtung zum Klemmen eines drehbar gelagerten Wellenelements gemäß einem Ausführungsbespiel der vorliegenden Erfindung, welches insbesondere an der Rundachsvorrichtung gemäß den Figs. 1 bis 3 eingebaut ist; und
Fig. 5 zeigt eine beispielhafte Detaildarstellung aus Fig. 4.

### Detaillierte Beschreibung der Figuren und bevorzugter Ausführungsformen der vorliegenden Erfindung

Im Folgenden werden Beispiele bzw. Ausführungsbespiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein.

Es sei hervorgehoben, dass die vorliegende Erfindung in keinster Weise auf die im Folgenden beschriebenen Ausführungsbeispiele und deren Ausführungsmerkmale begrenzt bzw. eingeschränkt ist, sondern weiterhin jegliche Modifikationen der Ausführungsbeispiel umfasst, insbesondere diejenigen die durch Modifikationen der Merkmale der beschriebenen Beispiele bzw. durch Kombination einzelner oder mehrerer der Merkmale der beschriebenen Beispiele im Rahmen des Schutzumfangs der unabhängigen Ansprüche umfasst sind.

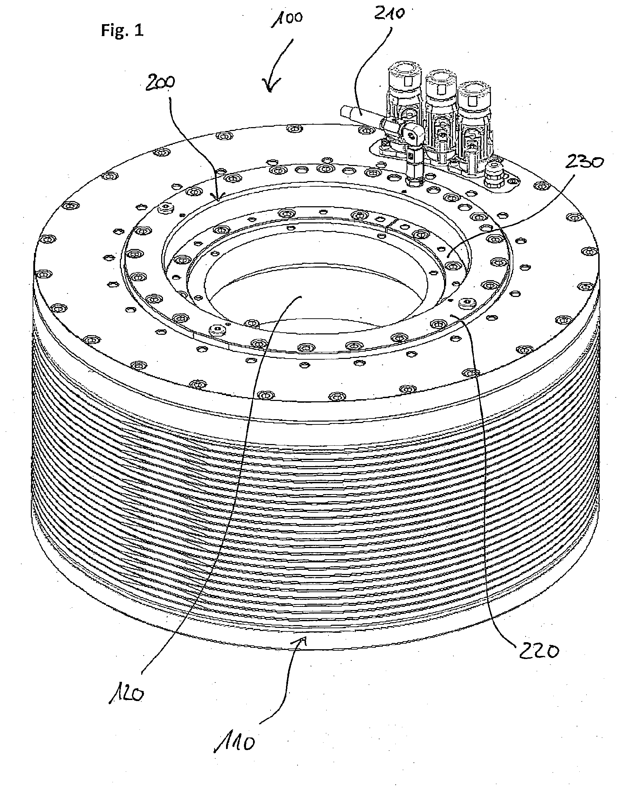

Fig. 1 zeigt eine beispielhafte Perspektivdarstellung einer Rundachsvorrichtung 100 einer Werkzeugmaschine gemäß einem beispielhaften Ausführungsbeispiel der vorliegenden Erfindung.

In Fig. 1 ist beispielhaft eine Rundachsvorrichtung 100 einer Rundachse einer Werkzeugmaschine gezeigt. Eine derartige Rundachsvorrichtung 100 ist zum Beispiel einsetzbar für eine Rundachse eines rotierbaren Werkzeugtischs einer numerischen Werkzeugmaschine.

Die vorliegende Erfindung ist jedoch nicht auf den Einsatz an Rundachsen einer Werkzeugmaschine beschränkt. Weiterhin ist es in anderen Ausführungsbeispielen möglich, eine erfindungsgemäße Klemmvorrichtung an Schwenk-, Rund- bzw. Revolverachsen einer Werkzeugmaschine oder auch an einer Arbeitsspindel einer Werkzeugmaschine vorzusehen.

Die Rundachsvorrichtung 100 umfasst beispielhaft ein äußeres Gehäuse 110, welches beispielhaft ringförmig bzw. im Wesentlichen hohlzylinderförmig ausgebildet ist. Im Inneren des Gehäuses 110 ist bespielhaft ein hohles Wellenelement 120 (Hohlwellenelement) drehbar gelagert.

Die vorliegende Erfindung ist jedoch nicht auf die Klemmung von hohlen Wellenelementen beschränkt, sondern ist für die Klemmung jeglicher drehbarer Wellenelemente einsetzbar, zum Bespiel für Hohlelemente oder Vollprofilelemente.

Zudem kann die Rundachsvorrichtung 100 eine Antriebsvorrichtung (nicht gezeigt) aufweisen, die dazu eingerichtet ist, das drehbar gelagerte Wellenelement 120 rotatorisch um eine Rotationsachse anzutreiben, zum Beispiel durch zusätzlich vorgesehene Getriebe oder auch durch Direktantrieb, zum Beispiel durch einen Torque-Motor.

Beispielhaft umfasst die Rundachsvorrichtung 100 gemäß Fig. 1 eine Klemmvorrichtung 200 gemäß einem Ausführungsbeispiel der vorliegenden Erfindung.

Beispielhaft umfasst die Klemmvorrichtung 200 ein ringförmiges Gehäuseelement 220 und einen an dem ringförmigen Gehäuseelement 220 angeordneten Anschluss 210 (Pneumatik- oder Hydraulikanschluss).

Zur Aktvierung der Klemmung bzw. zum Lösen der Klemmung der Klemmvorrichtung 200 kann der Anschluss 210 an ein Pneumatik- und/oder Hydrauliksystem anschließbar sein. In bevorzugten Ausführungsbeispielen ist der Anschluss 210 zur Druckbeaufschlagung an ein Hydrauliksystem anschließbar, da Hydrauliksysteme durch die Verwendung von nichtverdichtbaren Fluiden (z.B. Öl oder Wasser) nicht nur hohe Drücke sondern auch eine schnelle Druckweitergabe bzw. Druckausbreitung im System ermöglichen und somit eine Aktivierung bzw. Deaktivierung des Klemmmechanismus zum Klemmen bzw. Lösen der Klemmverbindung mit schnellen Reaktionszeiten und sehr geringen Verzögerungen ermöglicht ist.

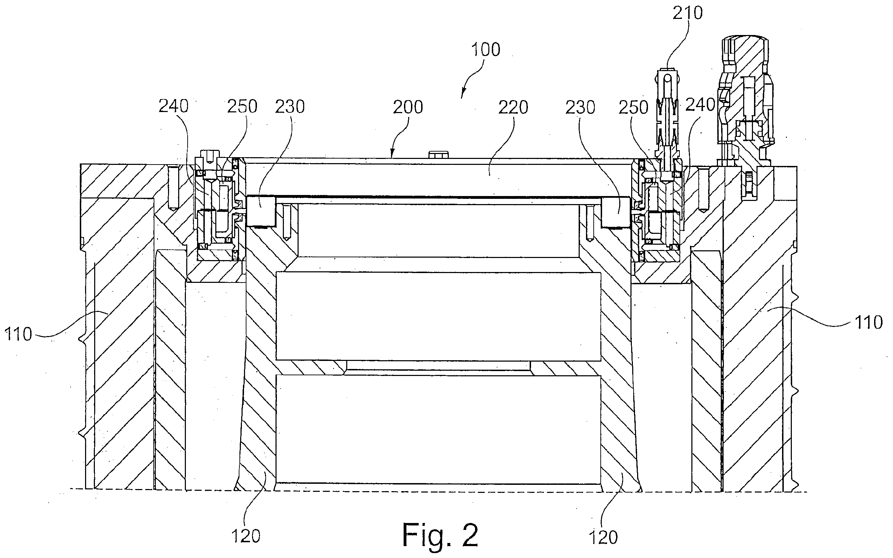

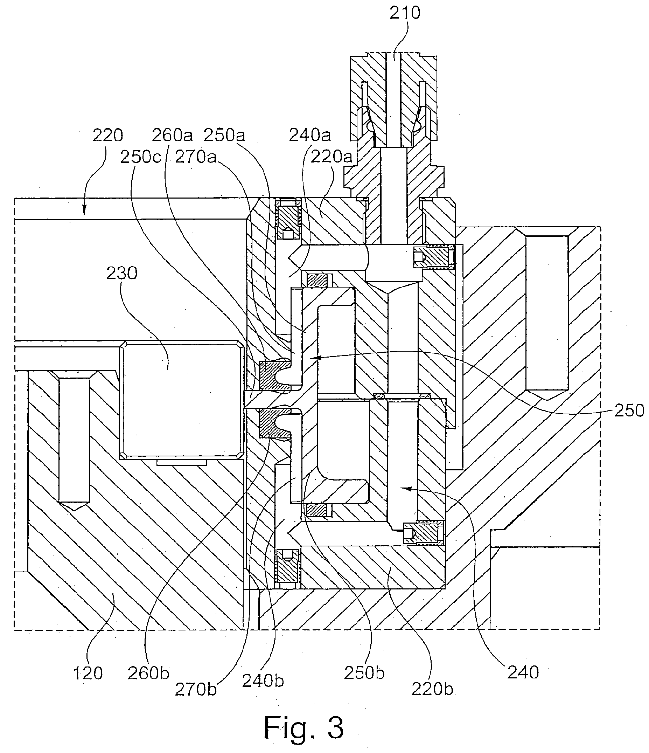

Fig. 2 zeigt eine beispielhafte Schnittdarstellung durch einen oberen Teil der Rundachsvorrichtung 100 aus Fig. 1 mit der Klemmvorrichtung 200. Fig. 3 zeigt eine Detaildarstellung der Klemmvorrichtung 200 gemäß dem Ausführungsbeispiel der vorliegenden Erfindung gemäß Fig. 2.

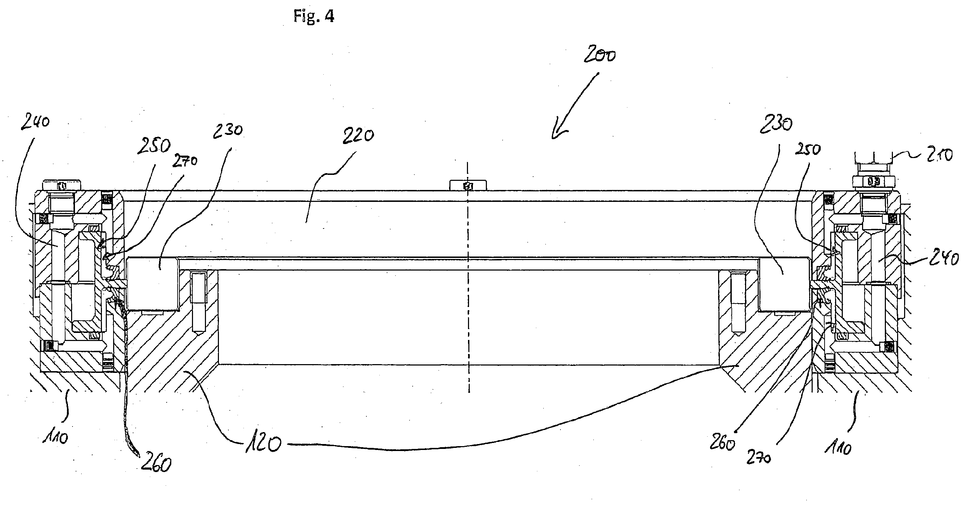

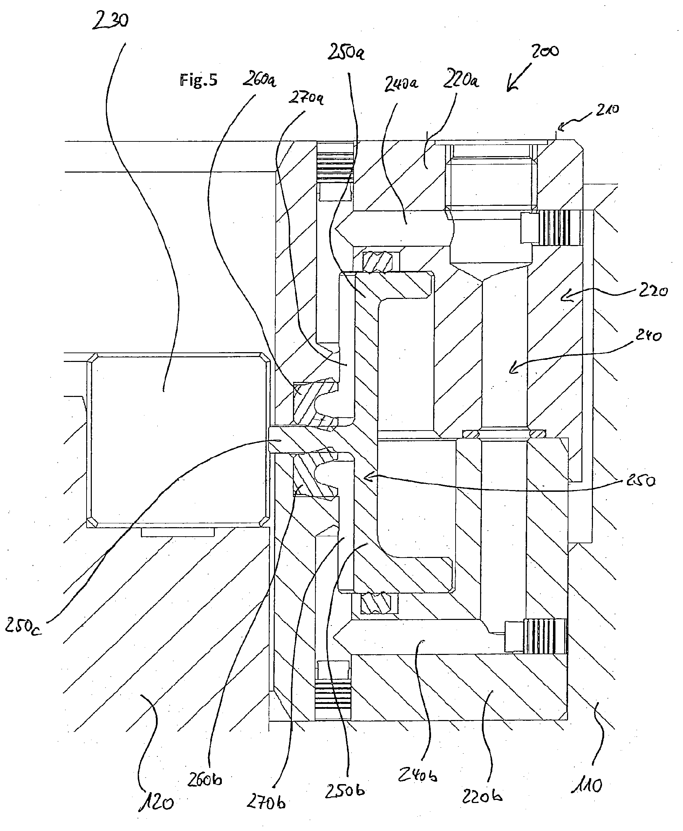

Fig. 4 zeigt eine Schnittdarstellung der beispielhaft ringförmig ausgestalteten Vorrichtung (Klemmvorrichtung 200) zum Klemmen des drehbar gelagerten Wellenelements 120 gemäß einem Ausführungsbespiel der vorliegenden Erfindung, welches insbesondere an der Rundachsvorrichtung 100 gemäß den Figs. 1 bis 3 an- bzw. eingebaut ist. Fig. 5 zeigt schließlich eine beispielhafte Detaildarstellung der Klemmvorrichtung 200 gemäß Fig. 4.

Gemäß den Figs. 2 bis 5 umfasst die Klemmvorrichtung 200 gemäß einem Ausführungsbeispiel beispielhaft das bereits vorstehend erwähnte Gehäuseelement 220, an dem zumindest ein Anschluss 210 außenseitig angeordnet ist. Dieser Anschluss 210 ist an ein Pneumatik- und/oder Hydrauliksystem anschließbar.

Im Inneren des Gehäuseelements 220, welches beispielhaft ringförmig ausgebildet ist, sind innere Fluidleitungen 240 angeordnet, die mit dem Anschluss 210 verbunden sind.

Hierbei kann beispielhaft mittels eines angeschlossenen Pneumatik- und/oder Hydrauliksystems über den Anschluss 210 ein Druck in den Fluidleitungen 240 beaufschlagt werden, zum Beispiel mittels eines mit Druck beaufschlagten Gases im Falle eines Anschlusses eines Pneumatiksystems oder bevorzugt mittels eines nicht oder im Wesentlichen nicht komprimierbaren Fluids (zum Beispiel Wasser und/oder Öl) im Falle eines Anschlusses eines Hydrauliksystems.

Bevorzugt ist das Gehäuseelement 220 bzw. sind die Fluidleitungen 240 in dem Gehäuseelement 220 dazu ausgelegt, hohe Drücke zu ermöglichen bzw. hohen Drücken standzuhalten, insbesondere zum Beispiel einen Hydraulikdruck größer oder gleich 100 Bar, bevorzugt größer oder gleich 120 Bar.

Wie in den beispielhaften Darstellungen der Figs. 2 bis 5 gezeigt, können die Fluidleitungen 240 zum Beispiel durch Bohrungen in dem Gehäuseelement 220 ausgebildet sein, die nach außen abgedichtet und mit Schrauben verschlossen sind.

Weiterhin umfasst das Gehäuseelement 220 bevorzugt ringförmig umlaufende Druckkammern 270, die mit den Fluidleitungen 240 verbunden sind, so dass ein über den Anschluss 210 auf die Fluidleitungen 240 aufgebrachter Druck auf die Druckkammern 270 mit beaufschlagt wird.

Zusätzlich ist in dem Gehäuseelement 220 beispielhaft ein ringförmig umlaufendes Klemmringelement 250 angeordnet. Das Klemmringelement 250 ist bevorzugt aus einem elastischem verformbaren Material, insbesondere einem elastisch verformbaren Kunststoff bzw. einer Hartgummimischung ausgebildet.

Das Klemmringelement 250 ist beispielhaft radial außenseitig in Bezug auf die Druckkammern 270 angeordnet und grenzt insbesondere beispielhaft direkt an die Druckkammern 270 an.

Das Klemmringelement 250 weist beispielhaft einen im Wesentlichen T-förmigen Querschnittsabschnitt im Profil auf, wobei ein mittlerer Profilabschnitt 250c (Radialabschnitt 250c) des Klemmringelements 250 sich radial nach innen in Richtung des drehbar gelagerten Wellenelements 120 erstreckend angeordnet ist und sich von dem mittleren Profilabschnitt 250c (Radialabschnitt 250c) des Klemmringelements 250 jeweils axiale Profilabschnitte 250a und 250b (Axialabschnitte 250a und 250b) von dem mittleren Abschnitt 250c des Klemmringelements 250 in axialer Richtung weg erstrecken.

Beispielhaft sind an dem bzw. zusätzlich zu dem T-förmigen Querschnittsabschnitt und insbesondere an dem oberen Axialabschnitt 250a des Klemmringelements 250 am axialen Ende ein quer (radial) verlaufender Endabschnitt und an dem unteren Axialabschnitt 250b des Klemmringelements 250 am axialen Ende ein quer (radial) verlaufender Endabschnitt angeordnet, um das Gesamtprofil des Klemmringelements 250 weiter zu stabilisieren.

Weiterhin ist ein erster (oberer) Druckkammerabschnitt 270a der Druckkammer 270 radial innenseitig von dem oberen Profilabschnitt 250a (Axialabschnitt 250a) des Klemmringelements 250 angeordnet und ist ein zweiter (unterer) Druckkammerabschnitt 270b der Druckkammer 270 radial innenseitig in Bezug auf den Profilabschnitt 250b (Axialabschnitt 250b) des Klemmringelements 250 angeordnet.

Der mittlere Profilabschnitt 250c (Radialabschnitt 250c) des Klemmringelements 250 erstreckt sich beispielhaft radial nach innen, in Richtung des drehbar gelagerten Wellenelements 120 und erstreckt sich beispielhaft durch einen ringförmigen Schlitz des Gehäuseelements 220 der Klemmvorrichtung 200 in den hohlförmigen Innenabschnitt des ringförmigen Gehäuseelements 220, so dass der mittlere Profilabschnitt 250c (Radialabschnitt 250c) des Klemmringelements 250 beispielhaft in Kontakt mit einem Ringelement 230 steht, das auf dem drehbar gelagerten Wellenelement 120 beispielhaft drehfest befestigt ist, z.B. mittels Schrauben.

Der mittlere Abschnitt 250c (Radialabschnitt 250c) des Klemmringelements 250 erstreckt sich zudem beispielhaft zu dem hohlförmigen Innenbereich des Gehäuseelements 220 in radialer Richtung zwischen zwei ringförmigen Dichtungselementen 260a und 260b einer Dichtung 260.

Die Dichtungselemente 260a und 260b der Dichtung 260 grenzen beispielhaft an die Druckkammerabschnitte 270a und 270b der Druckkammer 270 an und dichten diese zu dem Schlitz des Gehäuses 220 ab, durch welchen sich der mittlere Profilabschnitt 250c (Radialabschnitt 250c) des Klemmringelements 250 nach radial innen zu dem drehbar gelagerten Wellenelement 120 bzw. dem Ringelement 230 erstreckt.

Der Klemmring bzw. das Klemmringelement 250 ist bevorzugt mit einem fertigungstechnisch bedingten Untermaß gegenüber dem Ringelement 230 bzw. dem Außendurchmesser des Ringelements 230 angepasst, so dass ein innerer Durchmesser des Klemmringelements 250, insbesondere an einer innersten Stelle des mittleren Profilabschnitts 250c (Radialabschnitt 250c) des Klemmringelements 250 im Ruhezustand kleiner ist als der Außendurchmesser des Ringelements 230.

Somit klemmt das Klemmringelement 250 im Ruhezustand (insbesondere ohne beaufschlagtem Druck in den Druckkammerabschnitten 270a und 270b) mit an das Ringelement 230 angepresstem mittleren Profilabschnitt 250c das Ringelement 230 kraftschlüssig.

Folglich kann im Ruhezustand des Klemmringelements 250 das Ringelement 230 über den angepressten mittleren Profilabschnitt 250c (Radialabschnitt 250c) des Klemmringelements 250 drehfest geklemmt werden, und somit auch das mit dem Ringelement 230 drehfest befestigte Wellenelement 120.

Dies hat den Vorteil, dass im Ruhezustand ohne beaufschlagtem Druck in den Druckkammern 270 die Welle bzw. das drehbar gelagerte Wellenelement 120 über das Klemmringelement 250 geklemmt ist.

Versuche der Erfinder haben hierbei ergeben, dass ein Klemmmoment von über 1000 Nm bei einfachem und kompaktem Aufbau in radialer als auch axialer Richtung erreichbar ist.

Weiterhin ergibt sich der Vorteil einer sehr effizienten Sicherheitsfunktion, da bei Ausfall des Pneumatik- oder Hydrauliksystems bzw. bei auftretenden Undichtigkeiten bzw. einem unerwünschten Abfall des Systemdrucks, zum Beispiel bis auf den Umgebungsdruck (z.B. äußerer Luftdruck), eine automatische Sicherheitsklemmung des Wellenelements 120 ohne Verzögerung gewährleistbar ist.

Zusätzlich ergibt sich der Vorteil, dass durch Druckbeaufschlagung über den Anschluss 210 und die Fluidleitungen 240 durch die Fluidleitungsabschnitte 240a und 240b in die Druckkammerabschnitte 270a und 270b der Druckkammer 270 ohne Verzögerungen durch elastische Verformung des Klemmringelements 250 in Richtung radial nach außen die Klemmung des Ringelements 230 bzw. darüber die Klemmung des drehbar gelagerten Wellenelements 120 schnell, einfach und effizient ohne Verzögerung möglich ist.

Beispielhaft ist die Klemmvorrichtung 200 gemäß dem Ausführungsbeispiel der Figs. 2 bis 5 derart aufbaut, dass das Gehäuseelement 220 einen oberen ringförmigen Gehäuseabschnitt 220a und einen unteren ringförmigen Gehäuseabschnitt 220b aufweist, die auf einfache Art und Weise zum Beispiel mittels Schrauben aneinander befestigt sind.

Durch Lösen der Verbindung der beiden Gehäuseabschnitte 220a und 220b des Gehäuseelements 220 kann die Klemmvorrichtung 220 einfach gewartet werden bzw. Einzelteile bei Verschleiß ausgetauscht werden.

So können insbesondere auf einfache Weise die Fluidleitungen 240 bzw. die Druckkammern 270 gereinigt werden und auch das Klemmringelement 250 und/oder die Dichtungselemente 260a und 260b auf einfache und effiziente Weise durch entsprechende Ersatzelemente ausgetauscht werden.

Es sei darauf hingewiesen, dass in dem vorstehenden Ausführungsbespiel die Anordnung des Klemmringelements 250 und der Druckkammerabschnitte 270a und 270b symmetrisch ausgebildet ist, derart dass das Klemmringelement 250 auf beiden Seiten in axialer Richtung des mittleren Profilabschnitts 250c (Radialabschnitt 250c), der sich radial nach innen erstreckt, jeweilige obere und untere Klemmringabschnitte 250a und 250b (Axialabschnitte 250a und 250b) befinden, die jeweils einer radial innenseitig angeordneten Druckkammer 270a bzw. 270b zugeordnet sind.

Dies hat den Vorteil, dass die elastische Verformung des Klemmringelements 250 radial nach außen bei Druckbeaufschlagung in den Druckkammerabschnitten 270a und 270b gleichmäßig erfolgen kann.

Jedoch ist die vorliegende Erfindung nicht auf derartige Ausführungsbeispiele beschränkt, bei denen das Klemmringelement 250 einen insbesondere im Wesentlichen T-förmigen Abschnitt aufweist (mit den Profilabschnitten 250a, 250b und 250c), sondern es sind weiterhin Ausführungsbeispiele möglich, bei denen die Axialabschnitte mit unterschiedlicher Dimensionierung bereitgestellt sind. Zudem sind Ausführungsbeispiele möglich, bei denen sich von einem sich nach innen in radialer Richtung erstreckenden Profilabschnitt (Radialabschnitt) des Klemmringelements 250 nur ein Axialabschnitt, der sich in eine Richtung axial von diesem weg erstreckt, bereitgestellt ist (z.B. indem das Klemmringelement einen im Wesentlichen L-förmigen Profilquerschnitt aufweist) und nur eine radial innenseitige Druckkammer in Bezug auf den einen Axialabschnitt bereitgestellt ist.

Zudem sei darauf hingewiesen, dass das separat angeordnete Ringelement 230 gemäß der vorstehenden Ausführung optional ist und weitere beispielhaft Ausführungsformen möglich sind, bei denen ein sich nach radial innen erstreckender Profilabschnitt (Radialabschnitt) des Klemmringelements 250 direkt an dem drehbar gelagerten Wellenelement 120 bzw. an dessen Außenoberfläche anliegt und das drehbar gelagerte Wellenelement 120 derart direkt geklemmt werden kann.

Weiterhin sei darauf hingewiesen, dass das Ringelement 230 entweder als ein vollmassives Ringelement bereitgestellt werden kann, oder auch als Hohlelement bereitgestellt werden kann, z.B. mit einem im Wesentlichen rechteckigen oder im Wesentlichen quadratischen Querschnitt. Das Ringelement kann auch in einer Mehrzahl von Ringelementsegmenten bereitgestellt werden, mit oder ohne Zwischenräumen zwischen den Ringelementsegmenten.

Weiterhin sei darauf hingewiesen, dass die in den Figs. 1 und 2 beispielhafte dargestellte Rundachsvorrichtung 100 beispielhaft nur auf einer axialen Seite (beispielhaft an der Oberseite) eine einzige Klemmvorrichtung 200 aufweist, wobei die vorliegende Erfindung nicht auf derartige Ausführungsformen eingeschränkt ist und vielmehr weitere beispielhafte Ausführungsformen möglich sind bei denen zwei oder mehr Klemmvorrichtungen 200 an verschiedenen axialen Positionen des drehbar gelagerten Wellenelements angeordnet sind.

Zudem sind weitere beispielhafte Ausführungsformen möglich bei denen in einem Gehäuseelement der Klemmvorrichtung nicht nur ein, sondern mehrere in axialer Richtung nebeneinander angeordnete Klemmringelemente angeordnet sind, die zum Beispiel über verbundene Fluidleitungen gleichzeitig mit Druck beaufschlagbar sein können bzw. mit separaten Fluidleitungen und separaten Druckkammern jeweils unabhängig voneinander mit Druck beaufschlagt werden können, um diese entweder zusammen oder unabhängig voneinander durch elastische Verformung jeweils radial nach außen aus der klemmenden Ruhestellung (Ruhezustand) in die gelöste Stellung zu verbringen, in der die drehbare Welle nicht geklemmt ist.

Zusammenfassend wird mit der vorliegenden Erfindung ein einfach aufgebautes und vorteilhaftes Klemmkonzept für Klemmvorrichtungen zum Beispiel zum Einsatz an Rund- bzw. Schwenkachsen von Werkzeugmaschinen vorgeschlagen, bei denen eine drehbare Welle durch pneumatisch und/oder hydraulisch aktivierbare Klemmung bzw. Lösung aus der Klemmung bereitgestellt werden kann, wobei die Klemmvorrichtung insbesondere sowohl in axialer als auch in radialer Richtung kompakt sowie einfach, kostenreduziert und einfach wartbar ausgebildet werden kann, und wobei zusätzlich nicht nur eine schnelle Umschaltung zwischen Klemmung und Lösung aus der Klemmung herbeigeführt werden kann, sondern zusätzlich eine hohe Sicherheit gegeben ist, da bei hohen Klemmmomenten ein fester, kraftschlüssiger Klemmzustand bereitgestellt werden kann, selbst bei Druckabfall bzw. Systemdruckverlust im angeschlossenen Pneumatik- und/oder Hydrauliksystem.

Vorstehend wurden Beispiele bzw. Ausführungsbeispiele der vorliegenden Erfindung sowie deren Vorteile detailliert unter Bezugnahme auf die beigefügten Figs. beschrieben. Es sei erneut hervorgehoben, dass die vorliegende Erfindung in keinster Weise auf die vorstehend beschriebenen Ausführungsbeispiele und deren Ausführungsmerkmale begrenzt bzw. eingeschränkt ist, sondern weiterhin Modifikationen der Ausführungsbeispiele umfasst, die durch Modifikationen der Merkmale der beschriebenen Beispiele bzw. durch Kombination einzelner oder mehrerer der Merkmale der beschriebenen Beispiele im Rahmen des Schutzumfangs der unabhängigen Ansprüche umfasst sind.

### Bezugszeichenliste

- 100: Rundachsvorrichtung

- 110: Gehäuse

- 120: Wellenelement

- 200: Klemmvorrichtung

- 210: Anschluss (Pneumatik- oder Hydraulikanschluss)

- 220: Gehäuseelement
- 220a: oberer Gehäuseelementabschnitt
- 220b: unterer Gehäuseelementabschnitt

- 230: Ringelement

- 240: Fluidleitung (Druckleitung)
- 240a: oberer Fluidleitungsabschnitt
- 240b: unterer Fluidleitungsabschnitt

- 250: Klemmringelement
- 250a: oberer Axialabschnitt des Klemmringelements
- 250b: unterer Axialabschnitt des Klemmringelements
- 250c: Radialabschnitt des Klemmringelements

- 260: Dichtung
- 260a: oberes Dichtungsringelement
- 260b: unteres Dichtungsringelement

- 270: Druckkammer
- 270a: oberer Druckkammerabschnitt
- 270b: unterer Druckkammerabschnitt

## Patentansprüche

1. Vorrichtung zum Klemmen eines drehbar gelagerten Wellenelements, umfassend:
ein einen ringförmigen Gehäuseabschnitt (220a, 220b) aufweisendes Gehäuseelement (220), wobei das drehbar gelagerte Wellenelement (120) sich in axialer Richtung durch einen Innenbereich des ringförmigen Gehäuseabschnitts (220a, 220b) erstreckend anordenbar ist;
ein elastisch verformbares, ringförmiges Klemmringelement (250), das in dem ringförmigen Gehäuseabschnitt (220a, 220b) des Gehäuseelements (220) angeordnet ist, wobei das Klemmringelement (250) ein Querschnittsprofil (250a, 250b, 250c) aufweist, mit einem ersten Profilabschnitt (250c), der sich radial nach innen erstreckt und durch eine ringförmig umlaufende Öffnung des ringförmigen Gehäuseabschnitts (220a, 220b) zu dem drehbar gelagerten Wellenelement (120) radial hin ragt, und zumindest einem zweiten Profilabschnitt (250a; 250b), der sich quer zu dem ersten Profilabschnitt (250c), insbesondere axial, erstreckt;
einer Druckkammer (270), die in dem ringförmigen Gehäuseabschnitt (220a, 220b) des Gehäuseelements (220) ausgebildet ist und zumindest einen Druckkammerabschnitt (270a; 270b) aufweist, der radial innenseitig benachbart zu dem zumindest einen zweiten Profilabschnitt (250a; 250b) des Klemmringelements (250) angeordnet ist;
wobei das drehbar gelagerte Wellenelement (120) in einem Ruhezustand des Klemmringelements (250) durch kraftschlüssige Verbindung mit dem zu dem Wellenelement (120) hin ragenden ersten Profilabschnitt (250c) des Klemmringelements (250) klemmbar ist, und wobei die kraftschlüssige Verbindung zwischen dem Wellenelement (120) und dem ersten Profilabschnitt (250c) zur Lösung der Klemmung des Wellenelements (120) lösbar ist, indem das Klemmringelement (250) durch pneumatische oder hydraulische Druckbeaufschlagung der Druckkammer (270) radial nach außen elastisch verformbar ist.

2. Vorrichtung gemäß Anspruch 1, **dadurch gekennzeichnet, dass**
im Ruhezustand des Klemmringelements (250) ein Innendurchmesser an dem ersten Profilabschnitt (250c) kleiner ist, als ein Außendurchmesser eines umlaufenden Kontaktabschnitts des Wellenelements (120) oder eines an dem Wellenelement (120) drehfest befestigten Ringelements (230), und der erste Profilabschnitt (250c) des Klemmringelements (250) zur kraftschlüssige Verbindung an dem umlaufenden Kontaktabschnitt des Wellenelements (120) oder am an dem Wellenelement (120) drehfest befestigten Ringelement (230) oder dessen Ringsegmentelementen anpresst.

3. Vorrichtung gemäß Anspruch 2, **dadurch gekennzeichnet, dass**
das Ringelement (230) als Vollringelement oder als eine Mehrzahl von Ringsegmentelementen ausgebildet ist.

4. Vorrichtung gemäß einem der vorstehenden Ansprüche, **gekennzeichnet durch**
einen an ein Pneumatik- oder Hydrauliksystem anschließbaren Anschluss (210), der zur Druckbeaufschlagung über eine oder mehrere in dem ringförmigen Gehäuseabschnitt (220a, 220b) des Gehäuseelements (220) ausgebildete Fluidleitungen (240) mit der Druckkammer (270) verbunden ist.

5. Vorrichtung gemäß einem der vorstehenden Ansprüche, **gekennzeichnet durch**
eine Dichtung (260), die dazu ausgebildet ist, einen Bereich zwischen dem ersten Profilabschnitt (250c) und der Druckkammer (270) abzudichten.

6. Vorrichtung gemäß Anspruch 5, **dadurch gekennzeichnet, dass**
die Dichtung (260) zwei Dichtungsringelemente (260a, 260b) umfasst, die auf jeweils axial gegenüberliegenden Seiten des ersten Profilabschnitts (250c) des Klemmringelements (250) angeordnet sind.

7. Vorrichtung gemäß einem der vorstehenden Ansprüche, **dadurch gekennzeichnet, dass**
der zumindest eine zweite Profilabschnitt (250a; 250b) und der erste Profilabschnitt (250c) des Klemmringelements (250) zusammen im Wesentlichen eine L-Form ausbilden.

8. Vorrichtung gemäß einem der vorstehenden Ansprüche, **dadurch gekennzeichnet, dass**
ein von dem ersten Profilabschnitt (250c) entfernter Endabschnitt des zumindest einen zweiten Profilabschnitts (250a; 250b) sich in radialer Richtung erstreckt.

9. Vorrichtung gemäß einem der vorstehenden Ansprüche, **dadurch gekennzeichnet, dass**
das Querschnittsprofil (250a, 250b, 250c) des Klemmringelements (250) zwei zweite Profilabschnitte (250a, 250b) aufweist, die auf jeweils axial gegenüberliegenden Seiten des ersten Profilabschnitts (250c) des Klemmringelements (250) angeordnet sind und sich jeweils quer zu dem ersten Profilabschnitt (250c), insbesondere axial, erstrecken.

10. Vorrichtung gemäß Anspruch 9, **dadurch gekennzeichnet, dass**
die zwei zweiten Profilabschnitte (250a, 250b) und der erste Profilabschnitt (250c) des Klemmringelements (250) zusammen im Wesentlichen eine T-Form ausbilden.

11. Vorrichtung gemäß Anspruch 9 oder 10, **dadurch gekennzeichnet, dass**
die Druckkammer (270) zwei Druckkammerabschnitte (270a, 270b) umfasst, die jeweils auf axial gegenüberliegenden Seiten des ersten Profilabschnitts (250c) des Klemmringelements (250) angeordnet sind, und jeweils einem der zwei zweiten Profilabschnitte (250a, 250b) des Klemmringelements (250) zugeordnet sind.

12. Vorrichtung gemäß Anspruch 11, **dadurch gekennzeichnet, dass**
jeder der zwei Druckkammerabschnitte (270a, 270b) radial innenseitig in Bezug auf den jeweiligen zugeordneten zweiten Profilabschnitt (250a; 250b) des Klemmringelements (250) angeordnet ist.

13. Vorrichtung gemäß Anspruch 12, **dadurch gekennzeichnet, dass**
eine Druckbeaufschlagung in den Druckkammerabschnitten (270a, 270b) jeweils den zugeordneten zweiten Profilabschnitt (250a; 250b) des Klemmringelements (250) radial nach außen drückt.

14. Vorrichtung gemäß einem der vorstehenden Ansprüche, **dadurch gekennzeichnet, dass**
der zumindest eine Druckkammerabschnitt (270a; 270b) der Druckkammer (270) ringförmig umlaufend in dem ringförmigen Gehäuseabschnitt (220a, 220b) des Gehäuseelements (220) ausgebildet ist.

15. Achsaufbau einer Werkzeugmaschine, umfassend:
ein Gehäuse (110),
ein in dem Gehäuse (110) drehbar gelagertes Wellenelement (120) einer Schwenk-, Rund- oder Revolverachse oder einer Spindel der Werkzeugmaschine, und
eine Vorrichtung zum Klemmen des drehbar gelagerten Wellenelements (120) gemäß einem der vorstehenden Ansprüche, wobei das Gehäuseelement (220) der Vorrichtung drehfest an dem Gehäuse (110) des Achsaufbaus befestigt ist.

## Claims

1. A device for clamping a rotatably mounted shaft element, comprising:
a housing element (220) having an annular housing portion (220a, 220b), wherein said rotatably mounted shaft element (120) can be arranged to extend in axial direction through an inner region of said annular housing portion (220a, 220b);
an elastically deformable annular clamping ring element (250) arranged in said annular housing portion (220a, 220b) of said housing element (220), wherein said clamping ring element (250) comprises a cross-sectional profile (250a, 250b, 250c) comprising a first profile portion (250c) which extends radially inward and protrudes radially toward said rotatably mounted shaft element (120) through an annular circumferential opening of said annular housing portion (220a, 220b), and at least a second profile portion (250a, 250b) which extends transversely to said first profile portion (250c);
a pressure chamber which is formed in said annular housing portion (220a, 220b) of said housing element (220) and comprises at least one pressure chamber portion (270a; 270b) arranged radially on the inner side adjacently to said at least one second profile portion (250a; 250b) of said clamping ring element (250);
wherein said rotatably mounted shaft element (120), in a rest state of said clamping ring element (250), can be clamped by frictional connection with said first profile portion (250c) of said clamping ring element (250) protruding towards said shaft element (120), and wherein the frictional connection between said shaft element (120) and said first profile portion (250c) for releasing the clamping of said shaft element (120) is releasable by said clamping ring element (250) being elastically deformable radially outward by application of pneumatic or hydraulic pressure of said pressure chamber (270).

2. The device according to claim 1, **characterized in that**
in the rest state of said clamping ring element (250), an inner diameter at said first profile portion (250c) is smaller than an outer diameter of a circumferential contact portion of said shaft element (120) or a ring element (230) attached to said shaft element (120) in a rotationally fixed manner, and said first profile portion (250c) of said clamping ring element (250) presses against said circumferential contact portion of said shaft element (120) or against said ring element (230) attached to said shaft element (120) in a rotationally fixed manner or ring segment elements thereof for frictional connection.

3. The device according to claim 2, **characterized in that**
said ring element (230) is configured as a full ring element or a plurality of ring segment elements.

4. The device according to one of the previous claims, **characterized by**
a connection (210) which is connectable to a pneumatic or hydraulic system and is connected to said pressure chamber (270) for pressurization via one or more fluid lines (240) formed in said annular housing portion (220a, 220b) of said housing element (220).

5. The device according to one of the previous claims, **characterized by**
a seal (260) which is configured to seal an area between said first profile portion (250c) and said pressure chamber (270).

6. The device according to claim 5, **characterized in that**
said seal (260) comprises two sealing ring elements (260a, 260b) which are arranged on respective axially opposite sides of said first profile portion (250c) of said clamping ring element (250).

7. The device according to one of the previous claims, **characterized in that**
said at least one second profile portion (250a; 250b) and said first profile portion (250c) of said clamping ring element (250) substantially form an L-shape together.

8. The device according to one of the previous claims, **characterized in that**
an end portion of said at least one second profile portion (250a; 250b) which is remote from said first profile portion (250c) extends in a radial direction.

9. The device according to one of the previous claims, **characterized in that**
said cross-sectional profile (250a, 250b, 250c) of said clamping ring element (250) comprises two second profile portions (250a; 250b) which are arranged on respective axially opposite sides of said first profile portion (250c) of said clamping ring element (250) and each extend transversely to said first profile portion (250c).

10. The device according to claim 9, **characterized in that**
said two second profile portions (250a; 250b) and said first profile portion (250c) of said clamping ring element (250) substantially form a T-shape together.

11. The device according to claim 9 or 10, **characterized in that**
said pressure chamber (270) comprises two pressure chamber portions (270a, 270b) each arranged on axially opposite sides of said first profile portion (250c) of said clamping ring element (250) and each associated with one of said two second profile portions (250a; 250b) of said clamping ring element (250).

12. The device according to claim 11, **characterized in that**
each of said two pressure chamber portions (270a, 270b) is arranged radially on the inner side relative to the respective associated second profile portion (250a, 250b) of said clamping ring element (250).

13. The device according to claim 12, **characterized in that**
application of pressure in said pressure chamber portions (270a, 270b) respectively presses the associated second profile portion (250a; 250b) of said clamping ring element (250) radially outward.

14. The device according to one of the previous claims, **characterized in that**
said at least one pressure chamber portion (270a; 270b) of said pressure chamber (270) is configured annularly circumferential in said annular housing portion (220a, 220b) of said housing element (220).

15. An axis structure of a machine tool comprising:
a housing (110),
a shaft element (120) of a pivot, rotary or turret axis or of a spindle of said machine tool, said shaft element being rotatably mounted in said housing (110), and
a device for clamping said rotatably mounted shaft element (120) according to one of the previous claims, wherein said housing element (220) of said device is attached to said housing (110) of said axis structure in a rotationally fixed manner.

## Revendications

1. Dispositif de serrage d'un élément d'arbre monté mobile en rotation, comprenant :
un élément de boîtier (220) ayant une portion de boîtier annulaire (220a, 220b), l'élément d'arbre (120) monté mobile en rotation pouvant être agencé en s'étendant dans une direction axiale à travers une zone intérieure de la portion de boîtier annulaire (220a, 220b) ;
un élément d'anneau de serrage (250) annulaire déformable élastiquement, disposé dans la portion de boîtier annulaire (220a, 220b) de l'élément de boîtier (220), l'élément d'anneau de serrage (250) présentant un profil en section transversale (250a, 250b, 250c), ayant une première portion de profil (250c) qui s'étend radialement vers l'intérieur et qui fait saillie radialement à travers une ouverture périphérique annulaire de la portion de boîtier annulaire (220a, 220b) vers l'élément d'arbre (120) monté mobile en rotation, et ayant au moins une deuxième portion de profil (250a ; 250b) qui s'étend transversalement à la première portion de profil (250c), en particulier axialement ;
une chambre de pression (270) qui est formée dans la portion de boîtier annulaire (220a, 220b) de l'élément de boîtier (220) et qui présente au moins une portion de chambre de pression (270a ; 270b) qui est disposée radialement à l'intérieur au voisinage de ladite au moins une deuxième portion de profil (250a ; 250b) de l'élément d'anneau de serrage (250) ;
l'élément d'arbre (120) monté mobile en rotation pouvant être serré dans un état de repos de l'élément d'anneau de serrage (250) par une liaison par coopération de force avec la première portion de profil (250c) de l'élément d'anneau de serrage (250) faisant saillie vers l'élément d'arbre (120), et la liaison par coopération de force entre l'élément d'arbre (120) et la première portion de profil (250c) pouvant être libérée pour libérer le serrage de l'élément d'arbre (120) par le fait que l'élément d'anneau de serrage (250) est élastiquement déformable radialement vers l'extérieur par une sollicitation en pression pneumatique ou hydraulique de la chambre de pression (270).

2. Dispositif selon la revendication 1, **caractérisé en ce que**
à l'état de repos de l'élément d'anneau de serrage (250), un diamètre intérieur de la première portion de profil (250c) est inférieur à un diamètre extérieur d'une portion de contact périphérique de l'élément d'arbre (120) ou d'un élément annulaire (230) fixé solidairement en rotation à l'élément d'arbre (120), et la première portion de profil (250c) de l'élément d'anneau de serrage (250) se presse contre la portion de contact périphérique de l'élément d'arbre (120) ou contre l'élément annulaire (230) fixé solidairement en rotation à l'élément d'arbre (120) ou à ses éléments de segments annulaires, en vue d'une liaison par coopération de force.

3. Dispositif selon la revendication 2, **caractérisé en ce que**
l'élément annulaire (230) est réalisé sous la forme d'un élément en anneau complet ou sous la forme une pluralité d'éléments de segments annulaires.

4. Dispositif selon l'une des revendications précédentes, **caractérisé par**
un raccord (210) qui peut être raccordé à un système pneumatique ou hydraulique et qui est relié à la chambre de pression (270) pour la sollicitation en pression par une ou plusieurs conduites de fluide (240) formées dans la portion de boîtier annulaire (220a, 220b) de l'élément de boîtier (220).

5. Dispositif selon l'une des revendications précédentes, **caractérisé par**
un joint d'étanchéité (260) réalisé pour étancher une zone entre la première portion de profil (250c) et la chambre de pression (270).

6. Dispositif selon la revendication 5, **caractérisé en ce que**
le joint d'étanchéité (260) comprend deux éléments de bague d'étanchéité (260a, 260b) disposés respectivement sur les côtés axialement opposés de la première portion de profil (250c) de l'élément d'anneau de serrage (250).

7. Dispositif selon l'une des revendications précédentes, **caractérisé en ce que**
ladite au moins une deuxième portion de profil (250a ; 250b) et la première portion de profil (250c) de l'élément d'anneau de serrage (250) forment ensemble une forme sensiblement en L.

8. Dispositif selon l'une des revendications précédentes, **caractérisé en ce que**
une portion d'extrémité de ladite au moins une deuxième portion de profil (250a ; 250b) éloignée de la première portion de profil (250c) s'étend dans une direction radiale.

9. Dispositif selon l'une des revendications précédentes, **caractérisé en ce que**
le profil en section transversale (250a, 250b, 250c) de l'élément d'anneau de serrage (250) comprend deux deuxièmes portions de profil (250a, 250b) qui sont disposées respectivement sur les côtés axialement opposés de la première portion de profil (250c) de l'élément d'anneau de serrage (250) et qui s'étendent respectivement transversalement à la première portion de profil (250c), en particulier axialement.

10. Dispositif selon la revendication 9, **caractérisé en ce que**
les deux deuxièmes portions de profil (250a, 250b) et la première portion de profil (250c) de l'élément d'anneau de serrage (250) forment ensemble une forme sensiblement en T.

11. Dispositif selon la revendication 9 ou 10, **caractérisé en ce que**
la chambre de pression (270) comprend deux portions de chambre de pression (270a, 270b) qui sont disposées respectivement sur les côtés axialement opposés de la première portion de profil (250c) de l'élément d'anneau de serrage (250) et qui sont associées respectivement à l'une des deux deuxièmes portions de profil (250a, 250b) de l'élément d'anneau de serrage (250).

12. Dispositif selon la revendication 11, **caractérisé en ce que**
chacune des deux portions de chambre de pression (270a, 270b) est disposée radialement à l'intérieur par rapport à la deuxième portion de profil (250a ; 250b) respective associée de l'élément d'anneau de serrage (250).

13. Dispositif selon la revendication 12, **caractérisé en ce que**
une sollicitation en pression dans les portions de chambre de pression (270a, 270b) pousse la deuxième portion de profil associée (250a ; 250b) respective associée de l'élément d'anneau de serrage (250) radialement vers l'extérieur.

14. Dispositif selon l'une des revendications précédentes, **caractérisé en ce que**
ladite au moins une portion de chambre de pression (270a ; 270b) de la chambre de pression (270) est réalisée en forme d'anneau périphérique dans la portion de boîtier annulaire (220a, 220b) de l'élément de boîtier (220).

15. Ensemble d'axe d'une machine-outil comprenant
un boîtier (110),
un élément d'arbre (120), monté mobile en rotation dans le boîtier (110), d'un axe de pivotement, de rotation ou de tourelle ou d'une broche de la machine-outil, et
un dispositif de serrage de l'élément d'arbre (120) monté mobile en rotation selon l'une des revendications précédentes, l'élément de boîtier (220) du dispositif étant fixé solidairement en rotation au boîtier (110) de l'ensemble d'axe.
